# EUROPEAN PATENT SPECIFICATION

(11) **EP 1 699 665 B1**
(45) Date of publication and mention of the grant of the patent: **18.07.2007**
(21) Application number: 04809100.3
(22) Date of filing: 17.12.2004
(51) Int. Cl.: B60R 3/02

(54) **A VEHICLE LADDER AND A VEHICLE COMPRISING A VEHICLE LADDER**
FAHRZEUGLEITER UND EINE FAHRZEUGLEITER UMFASSENDES FAHRZEUG
ECHELLE DE VEHICULE ET VEHICULE COMPRENANT UNE TELLE ECHELLE

(30) Priority: 17.12.2003 SE 0303450
(43) Date of publication of application: 13.09.2006
(73) Proprietor: VOLVO LASTVAGNAR AB, 405 08 Göteborg (SE)
(72) Inventor: DANIELSEN, Björn, S-431 33 Mölndal (SE)
(74) Representative: Fröhling, Werner Otto
(86) International application number: PCT/SE2004/001927
(87) International publication number: WO 2005/058647

(56) References cited:
- DE-A1- 2 910 812
- US-A- 605 428
- US-A- 3 329 443
- US-A- 3 980 319
- US-A- 5 897 125

## Description

### TECHNICAL FIELD

The present invention relates to a vehicle ladder. The term vehicle ladder is used to denote a ladder that is mounted on large vehicles for the purpose of facilitating access to parts of the vehicle, for example next to the entrance to the cab, in order to provide access to engine covers, the roof or load areas in an elevated position. The invention also relates to a vehicle on which a ladder of this kind has been mounted.

### PRIOR ART

Large vehicles, such as trucks, are commonly equipped with ladders to facilitate access to the cab. Maneuvering of the vehicles and requirements for the maximum width of the vehicles and the safety of other road users mean that these ladders are executed close to the essentially vertical side walls of the vehicle. A ladder of this kind is thus arranged essentially vertically with steps positioned vertically one above the other. When a driver or other passenger intends to enter the cab, he must lean backwards slightly in order to enable him to place his feet on the steps. This means that the center of gravity of the person using the ladder is situated outside the surface of the steps. Because the center of gravity is situated outside the step, the driver or other user of the ladder must use his hands in order to maintain a hold on the ladder. This in turn means that, in the first place, it is difficult to carry large or small objects into the cab, because at least one hand is required at all times to maintain a hold on the ladder, and that, in the second place, the arms and the trunk are subjected to loading in an unfavorable fashion, because it is not possible to utilize the strong leg musculature alone in order to gain entry to the cab, as would be the case in the event that normal stairs could be used.

A vehicle ladder comprising one step only, according to the preamble of claim 1, is known from US 3 980 319 A.

### DESCRIPTION OF THE INVENTION

The object of the invention is to make available an improved vehicle ladder to facilitate gaining entry into a vehicle cab, for example, where the ladder is executed in such a way that, when it is not in use, it exhibits steps which lie close to the essentially vertical side walls of the vehicle, and where, when they are in use, the steps are positioned in such a way that the center of gravity of the user can be situated within the step.

These objects are achieved through a vehicle ladder in accordance with the characterizing part of patent claim 1. In accordance with the invention, a vehicle ladder is used with a step exhibiting a first end, which is attached to a retaining device, and a second free end. The first end is pivotally attached to the retaining device about an axis of rotation. This means that the outer free end of the step can be caused to rotate outwards from the vehicle body, in conjunction with which it is possible to position the center of gravity on, rather than outside the step.

In accordance with a preferred embodiment of the invention, the step is so arranged, when a load is applied along the axis of rotation of the step, as to be caused to rotate about the aforementioned axis of rotation from an unloaded rest position to a stop position corresponding to maximum rotation of the aforementioned at least one step. This means that, when a person uses the ladder, the load imposed on the steps by the person will ensure that the steps are caused to rotate outwards from a rest position, in which the step lies close to the vehicle body, and into the desired outward-rotated stop position, in which it is possible to position the center of gravity of a user on the step.

In accordance with one embodiment of the invention, the step is suspended in such a way as to be capable of displacement along the aforementioned axis of rotation in a retaining device. In accordance with this embodiment, the retaining device comprises means for bringing about the simultaneous rotation of the step in conjunction with displacement of the step along the axis of rotation.

In accordance with one embodiment of the invention, this means consists of a screw-shaped track or groove arranged concentrically around the axis of rotation, which screw-shaped track or groove is so arranged as to interact with a supporting flange. Mutual displacement of the supporting flange and the track or the groove along the axis of rotation in this way brings about a rotating movement between the supporting flange and the track or the groove.

In order to ensure that the step in the unloaded position adopts its rest position, in which the step is situated next to the vehicle body, the retaining device associated with the step comprises a spring device that is so arranged as to cause the step to return to the unloaded rest position. The retaining device can also be equipped with a damper, which is so arranged as to delay the return of the step from the stop position to the unloaded rest position.

In accordance with one embodiment of the invention, the vehicle ladder comprises at least two steps, each of which is so arranged, when subjected to loading along an axis of rotation, as to be caused to rotate about an axis of rotation from an unloaded rest position to a stop position corresponding to the maximum rotation of the steps. The steps are so arranged as to be capable of being caused to rotate independently of one another, in conjunction with which the positioning of the steps can be displaced from being situated above one another into a position in which the rotatable steps exhibit an angle between one another.

In accordance with one embodiment of the invention, each of the steps is arranged with a maximum angle of rotation from the aforementioned rest position to the aforementioned maximum rotation, and in that the maximum angle of rotation increases for consecutive steps in the direction of the axis of rotation. A vehicle ladder of this kind is so arranged as to be mounted on a vehicle so that the maximum angle of rotation is greatest for steps closest to the ground. This means that the lowest step will be caused to rotate outwards to the greatest extent.

In accordance with a further embodiment, the vehicle ladder exhibits steps having a length between the aforementioned first and second ends which reduces for every consecutive step in the direction of the axis of rotation. In the event that the vehicle ladder is mounted on a wheel housing, the vehicle ladder can be mounted so that the length of the steps is shortest for steps nearest the ground. This means that a space between a vertical upright, which supports the steps and the retaining devices, and the wheel housing can be used for steps which extend in between. This embodiment may be combined advantageously with the embodiment in which the maximum angle of rotation is greatest for the step that is positioned closest to the ground, as it is possible in this way to ensure that the outer end of lower steps can be caused to rotate outwards at least as far as superjacent steps.

In accordance with one embodiment of the invention, each of the steps exhibits a retaining device containing a spring device. The spring devices are so arranged, in the event of the consecutive loading of the steps from a first step, which is intended to be positioned nearest the ground when the steps are mounted on a vehicle in an upward direction, as to be subjected to a load consecutively one after the other, in conjunction with which the displacement of each step takes place against one spring device at a time. This can be achieved by compressing the spring device for a bottom step, in conjunction with which the step is caused to be displaced downwards. In this position, there is no contact between the bottom step and the next step. When the next step is subjected to loading, this can only take place against the spring device which belongs to that step, because the spring device belonging to the step below is already compressed. On the other hand, all the spring devices belonging to a loaded step and to steps situated below the loaded step are subjected to loading in the event that loading of the steps takes place from a first step, which is situated furthest from the ground when the steps are mounted on a vehicle. This can be achieved by allowing all the steps to rest on one another. One object of a preferred embodiment is to facilitate climbing down from a cab in spite of the fact that steps can be caused under loading to rotate outwards from the vehicle. For this purpose, the ladder is executed so that none of the steps is capable, when a loading is applied to a step which lies above other steps, of being displaced downwards without ensuring that all the subjacent steps have been displaced downwards. This means that the top step is perceived as being fixed in the event that climbing takes place down from the cab. This facilitates climbing down from the cab, because superjacent steps will not be caused to rotate outwards from subjacent steps, which could result in subjacent steps being difficult to find. In the event that subjacent steps are so arranged as to be angled outwards to a greater extent for a given axial displacement, successively increasing outward rotation in a downward direction is achieved in conjunction with climbing out of the cab when the loading on the ladder is sufficient to compress the spring devices which belong to a loaded step and any steps which are situated below the loaded step.

### DESCRIPTION OF THE DRAWINGS

One embodiment of the invention is described below in greater detail with reference to the accompanying drawings, in which:
- Fig. 1: shows a vehicle ladder in accordance with invention viewed from the side;
- Fig. 2: shows a part of a tube which constitutes the upright from which steps are suspended;
- Fig. 3: shows a step construction comprising a step and a sleeve which is intended to be placed concentrically around the tube in Figure 2;
- Fig. 4: shows a step construction viewed from above, in which a groove can be appreciated in the form of a peg, or alternatively a transcurrent pin, which is intended to engage in a track in the tube in Figure 2;
- Fig. 5: shows a vehicle ladder in accordance with the invention with spring devices for returning the steps to their rest positions and with tracks, which are so arranged as to interact with pegs in order to being about a rotating movement in the event of the axial loading of the steps;
- Fig. 6: shows the same vehicle ladder as in Figure 5, in which the bottom step has been brought to its outward-rotated stop position;
- Fig. 7: shows a vehicle ladder in accordance with the invention viewed from above with all three steps brought to their respective stop positions;
- Fig. 8: shows a combined spring device and damper; and
- Fig. 9: shows a vehicle supporting a vehicle ladder in accordance with the invention.

### BEST MODE(S) OF CARRYING OUT THE INVENTION

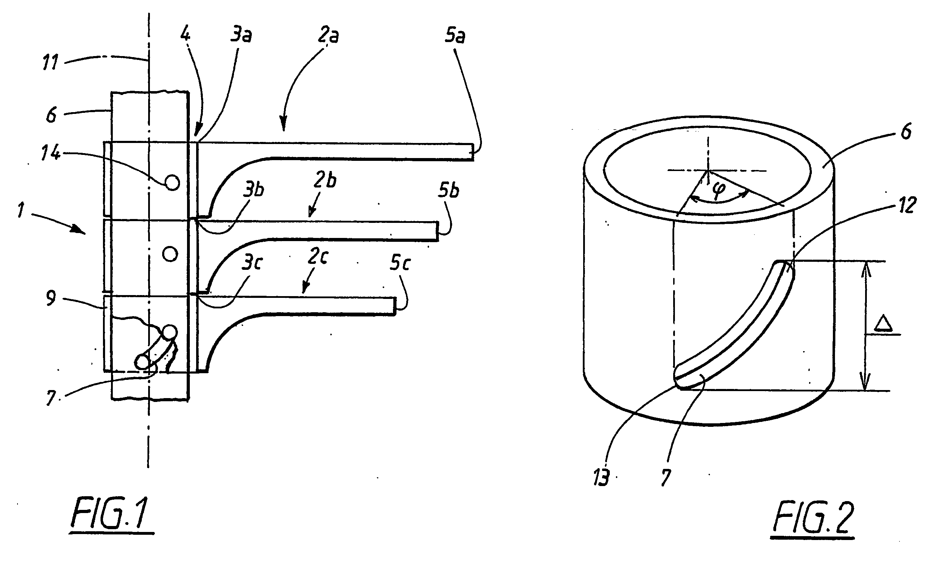

Illustrated in Figure 1 is a vehicle ladder 1 in accordance with the invention viewed from the side. The vehicle ladder comprises three steps 2a, 2b, 2c positioned above one another. The steps 2a - 2c exhibit a first end 3a - 3c, which is attached to a retaining device 4, and a second free end 5a - 5c.

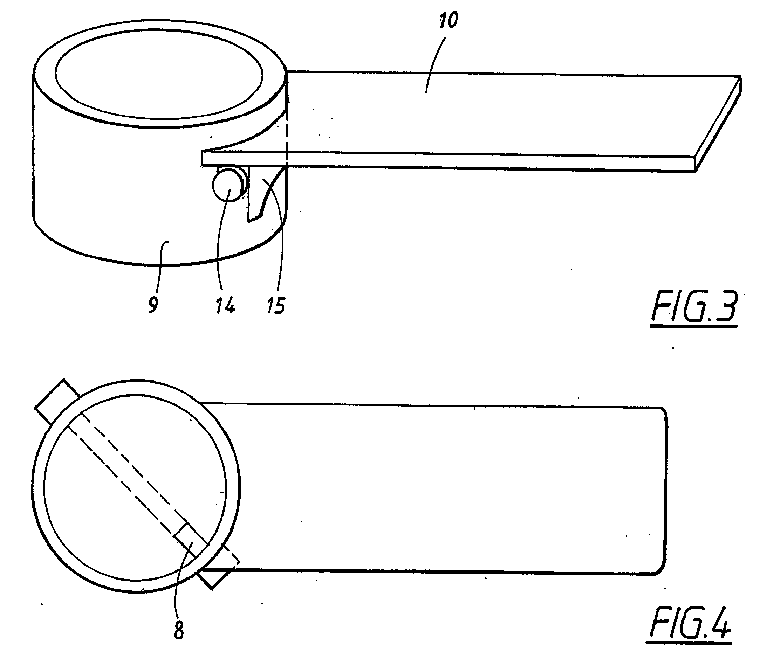

The retaining device 4 is executed from a tube 6, which exhibits grooves 7 into which a peg 8 (Fig. 4) or a pin are introduced. A partially cut-away view of the bottom sleeve is shown in Figure 1, in which the groove 7 is visible. Shown in detail in Figure 2 is the tube 6 with a groove 7, into which a supporting flange 8, for example in the form of a peg or pin belonging to a step 2a - 2c, must engage. In the event that a transcurrent pin is used, which is indicated with a broken line in Figure 4, the tube must be executed with diametrically opposing grooves. The peg 8 or the pin is attached to or executed on a sleeve 9. The sleeve 9 is attached to or integrated into the first end 3a - 3c of the respective step 2a - 2c. Each of the steps 2a - 2c thus comprises a step plate 10 and a sleeve 9 (Fig. 3). The sleeve 9 and the step plate 10 may be executed in a single piece, for example as a cast aluminum component.

The step plate 10 and the sleeve can also be joined together in a previously disclosed fashion, for example by welding or with a screwed joint.

The sleeve 9 is positioned concentrically around the tube 6 with a peg 8 or pin engaging in an associated groove 7 positioned in the material of the tube. When the step 2a - 2c is displaced axially along the axis of rotation 11 along which the tube 6 extends, the steps will be caused to rotate because the grooves are of screw-shaped execution. The maximum angle of rotation for the step is determined by the angle of opening f between the rest position 12 and the stop position 13. Where appropriate, the rest position can be situated next to the top end of he groove 7, although this is not necessary. The relationship between the angle of opening f and the displacement in the vertical sense determines what force component acts in the direction of rotation. The displacement must be made sufficiently large to ensure that rotation of the step can take place without resulting in the application of excessive force to the material in the tube, at the same time as the displacement must not be so great that the step is not found to sink significantly out of the way during use. A suitable height for the groove is thus ca. 1.5 - 4 cm. A suitable angle of opening f is dependent on which step 2a - 2c is intended and on the length of the step. Suitable angles of opening are preferably between 5 and 60°.

In order to ensure that the step 2a - 2c is sufficiently strong, the step 2a - 2c can be equipped with a supporting flange 15, which runs from the sleeve 9 in the direction of the free end 5a - 5c of the step 2a - 2c.

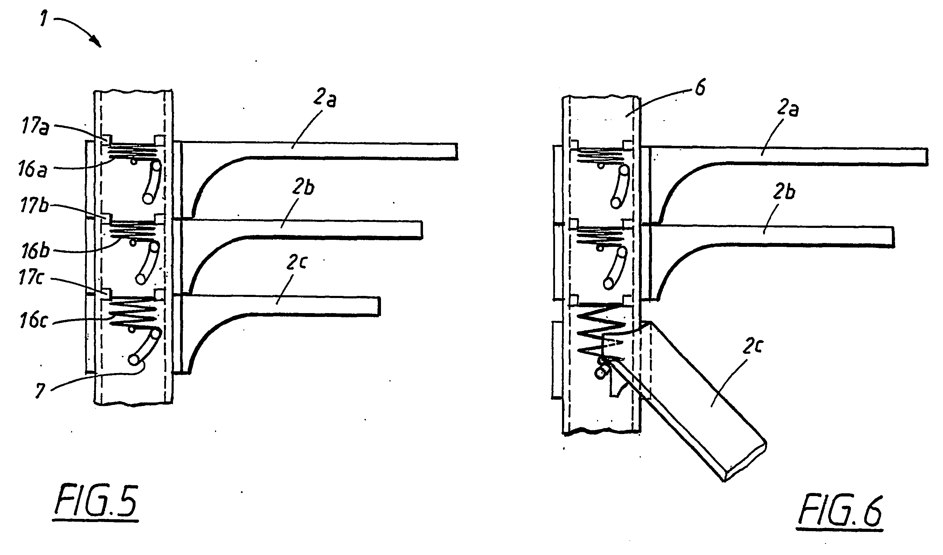

Figure 5 shows a vehicle ladder 1 with spring devices 16a - 16c for returning the steps 2a - 2c to rest positions and with grooves 7 which are so arranged as to interact with pegs (not shown) for bringing about a rotating movement in conjunction with the axial loading of the steps. The spring devices 16a - 16c are attached at their one end to the tube 6, for example to a supporting flange 17a - 17c formed on the tube. The other end of the spring devices 16a - 16c is attached to the respective step 2a - 2c, appropriately by being attached to the peg 8 or pin which runs in the groove 7. The spring devices 16a - 16c ensure that the steps are returned to their rest position when the step is not under load.

Illustrated in Figure 6 are the two upper steps 2a, 2b in their respective uploaded rest positions, while the step 2c has adopted its outward-rotated stop position. The tube 6 is illustrated here in a cut-away view, and the spring device belonging to the step 2c is shown in its unloaded condition.

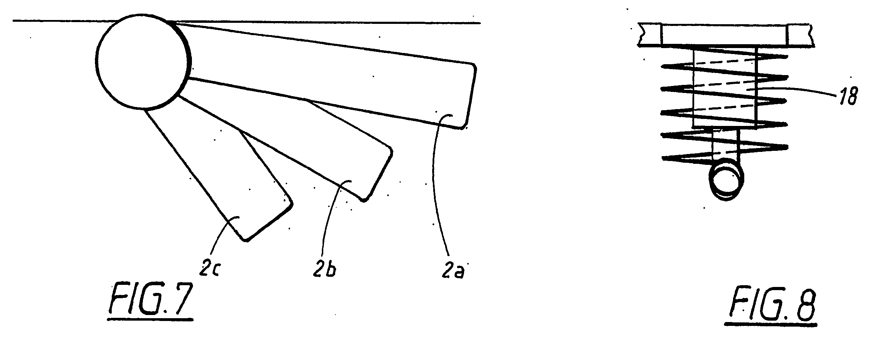

Illustrated in Figure 7 are three steps 2a - 2c in their respective stop positions.

As can be appreciated from Figures 5 and 6, the sleeves 9 of the respective steps are positioned in contact with one another when the steps are unloaded. When the bottom step 2c is loaded, this step is caused to be displaced from the steps which lie above the step 2c. This takes place under loading of the spring device 16, while the other spring devices remain unloaded. According to one embodiment of the invention, a damper 18 (Fig. 8) is so arranged as to interact with the respective spring device. The damper is so arranged as to delay the return of the steps from the stop position to the unloaded rest position. When a user loads the next step 2b, the step 2c remains for a time in its compressed position, in conjunction with which the step 2b can be displaced only during loading of the spring device 16b which belongs to the step 2b. The same procedure is repeated during loading of the third step 2a, in conjunction with which the latter can be forced down only during loading of the spring device 16a.

The damper can be executed as shown in Figure 8 as a viscous piston damper, of which one end is attached to the tube and the other end is attached to the step. The existing friction and damping between the tube and the sleeve may also be found to be sufficient.

In the event that the steps 2a - 2c are loaded in a direction from above, displacement of the step 2a will require the displacement of the steps that are situated below this loaded step. Because they have not yet been displaced and are still retained by the damper, all the steps must accordingly be displaced jointly during the loading of all the spring devices. This will mean that the step is perceived as being stable when stepping out onto it.

In accordance with an alternative embodiment of the invention, the spring devices are of a sufficiently slender execution to enable a user to compress all the spring devices with his own weight. In this case, the grooves can be executed so that the angle of opening becomes proportionally greater the closer a step is positioned in relation to the ground. In this case, a stair formation will be unfolded in conjunction with loading of the top step.

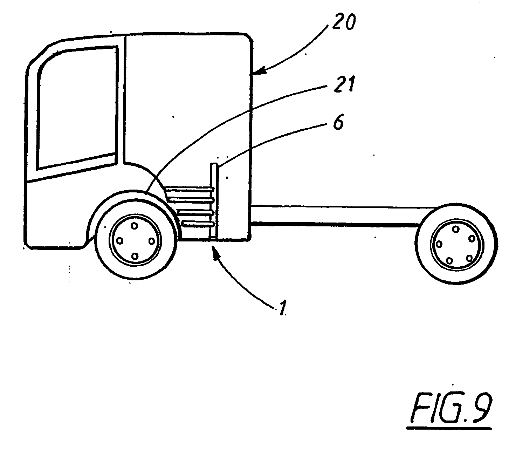

Illustrated in Figure 9 is a truck 20 which is carrying a vehicle ladder 1 in accordance with the above description. The vehicle ladder 1 is mounted in conjunction with a wheel housing 21. The tube 6 runs at a distance from the wheel housing 21, and the steps are executed with a length that is adapted to the space that is present between the wheel housing and the tube 6.

In a further alternative illustrative embodiment, a current or voltage sensor can be connected to the entrance to provide a warning in the event of unwelcome visits such as attempted robbery or burglary.

The invention must not be restricted to the embodiments indicated above, but may be freely varied within the scope of the following patent claims, for example the spring devices may exert their effect both in compression and in expansion.

## Claims

1. A vehicle ladder comprising at least one step (2a - 2c) exhibiting a first end (3a - 3c), which is pivotally attached about an axis of rotation (11) to a retaining device (4), and a second free end (5a - 5c), **characterized in that** the aforementioned at least one step (2a - 2c) is so arranged, when subjected to loading along the axis of rotation (11), as to be caused to rotate about the aforementioned axis of rotation (11) from an unloaded rest position into a stop position corresponding to maximum rotation of the aforementioned at least one step (2a - 2c).

2. The vehicle ladder as claimed in claim 1, **characterized in that** the aforementioned at least one step is suspended in its retaining device (4), in such a way as to be capable of displacement along the aforementioned axis of rotation (11), and **in that** the aforementioned retaining device comprises means (6, 7, 8) for bringing about the simultaneous rotation of the aforementioned at least one step (2a - 2c) in conjunction with displacement of the aforementioned at least one step along the aforementioned axis of rotation.

3. The vehicle ladder as claimed in claim 2, **characterized in that** the aforementioned means consists of a screw-shaped track or groove (7) which runs coaxially around the axis of rotation, which screw-shaped track or groove (7) is so arranged as to interact with a supporting flange (8), in conjunction with which the mutual displacement of the supporting flange (8) and the track or the groove (7) along the axis of rotation (11) brings about a rotating movement between the supporting flange and the track or the groove.

4. The vehicle ladder as claimed in one or other of claims 1 - 3, **characterized in that** the retaining device (4) comprises a spring device (16a - 16c), which is so arranged as to cause the aforementioned at least one step (2a - 2c) to return to the aforementioned unloaded rest position.

5. The vehicle ladder as claimed in one or other of the preceding claims, **characterized in that** the aforementioned vehicle ladder comprises at least two steps (2a, 2b), each of which is so arranged, when subjected to loading along an axis of rotation, as to be caused to rotate about the aforementioned axis of rotation from an unloaded rest position to a stop position corresponding to the maximum rotation (f) of the aforementioned at least two steps.

6. The vehicle ladder as claimed in claim 5, **characterized in that** each of the steps exhibits a maximum angle of rotation (f) from the aforementioned rest position to the aforementioned maximum rotation, and **in that** the maximum angle of rotation increases for consecutive steps in the direction of the axis of rotation.

7. The vehicle ladder as claimed in claim 6, **characterized in that** the vehicle ladder is so arranged as to be mounted on a vehicle so that the maximum angle of rotation is greatest for steps closest to the ground.

8. The vehicle ladder as claimed in one or other of claims 5 - 7, **characterized in that** the vehicle ladder exhibits steps having a length between the aforementioned first (3a - 3c) and second ends (5a - 5c), which reduces for consecutive steps in the direction of the axis of rotation.

9. The vehicle ladder as claimed in claim 8, **characterized in that** the vehicle ladder is so arranged as to be mounted on a vehicle so that the length of the steps is shortest for steps nearest the ground.

10. The vehicle ladder as claimed in one or other of claims 5 - 7, **characterized in that** each of the steps exhibits a retaining device (4) containing a spring device (6a - 6c), which is so arranged, in the event of the consecutive loading of the steps from a first step (2c) that is intended to be positioned nearest the ground when the steps are mounted on a vehicle (20) in an upward direction, as to be subjected to a load consecutively one after the other, in conjunction with which the displacement of each step (2a - 2c) takes place against one spring device (6a - 6c) at a time, and **in that**, in the event of the consecutive loading of the steps from a first step (2a) that is intended to be positioned furthest from the ground when the steps are mounted on a vehicle in a direction downwards, a loading is applied to all the spring devices (6a - 6c) belonging to a loaded step and any steps which are situated below the loaded step.

11. The vehicle ladder as claimed in claim 10, **characterized in that** the step (2c) that is so arranged as to be positioned closest to the ground in conjunction with mounting on a vehicle is retained in an unloaded position with the help of the spring device (6c) provided for this step, and **in that** steps (2a, 2b) that are positioned above this step rest against the immediately subjacent step (2b, 2c) and are retained in their rest position with the help of the spring devices (6b, 6c) provided for these steps.

12. The vehicle ladder as claimed in claims 10 or 11, **characterized in that** the retaining devices comprise dampers (18) which delay the return of the steps from the stop position to the unloaded rest position.

13. A vehicle comprising a vehicle ladder mounted on the vehicle as claimed in one or other of claims 1 - 12.

## Patentansprüche

1. Fahrzeugleiter mit wenigstens einer Stufe (2a - 2c), die ein erstes Ende (3a - 3c), das an einer Haltevorrichtung (4) um eine Drehachse (11) verschwenkbar angebracht ist, und ein zweites freies Ende (5a - 5c) aufweist, **dadurch gekennzeichnet, dass** die genannte wenigstens eine Stufe (2a - 2c) so ausgebildet ist, dass sie, wenn sie einer Belastung entlang der Drehachse (11) unterworfen ist, um die genannte Drehachse (11) aus einer unbelasteten Anlageposition in eine Anschlagposition in Drehung versetzt wird, die einer maximalen Drehung der genannten wenigstens einen Stufe (2a - 2c) entspricht.

2. Fahrzeugleiter nach Anspruch 1, **dadurch gekennzeichnet, dass** die genannte wenigstens eine Stufe in ihrer Haltevorrichtung (4) so aufgehängt ist, dass sie entlang der genannten Drehachse (11) verschiebbar ist, und dass die genannte Haltevorrichtung eine Einrichtung (6, 7, 8) umfasst, die die gleichzeitige Drehung der genannten wenigstens einen Stufe (2a - 2c) in Verbindung mit einer Verschiebung der genannten wenigstens einen Stufe entlang der genannten Drehachse bewerkstelligt.

3. Fahrzeugleiter nach Anspruch 2, **dadurch gekennzeichnet, dass** die genannte Einrichtung aus einer schraubenförmigen Bahn oder Nut (7) besteht, die koaxial um die Drehachse verläuft, wobei die schraubenförmige Bahn oder Nut (7) so ausgebildet ist, dass sie mit einem Stützflansch (8) zusammenwirkt, wobei die gegenseitige Verschiebung des Stützflansches (8) und der Bahn oder der Nut (7) entlang der Drehachse (11) eine Drehbewegung zwischen dem Stützflansch und der Bahn oder der Nut mit sich bringt.

4. Fahrzeugleiter nach dem einen oder anderen der Ansprüche 1 bis 3, **dadurch gekennzeichnet, dass** die Haltevorrichtung (4) eine Federvorrichtung (16a - 16c) umfasst, die so ausgebildet ist, dass sie eine Rückkehr der genannten wenigstens einen Stufe (2a - 2c) in die genannte unbelastete Anlageposition verursacht.

5. Fahrzeugleiter nach dem einen oder anderen der vorhergehenden Ansprüche, **dadurch gekennzeichnet, dass** die genannte Fahrzeugleiter wenigstens zwei Stufen (2a, 2b) umfasst, die jeweils so ausgebildet sind, dass sie, wenn sie einer Belastung entlang einer Drehachse unterworfen sind, in Drehung um die genannte Drehachse aus einer unbelasteten Anlageposition in eine Anschlagposition versetzt werden, die der maximalen Drehung (f) der genannten wenigstens zwei Stufen entspricht.

6. Fahrzeugleiter nach Anspruch 5, **dadurch gekennzeichnet, dass** jede Stufe einen maximalen Drehwinkel (f) aus der genannten Anlageposition in die genannte maximale Drehung aufweist, und dass der maximale Winkel der Drehung sich Stufe für Stufe in Richtung der Drehachse erhöht.

7. Fahrzeugleiter nach Anspruch 6, **dadurch gekennzeichnet, dass** die Fahrzeugleiter so ausgebildet ist, dass sie an einem Fahrzeug so angebracht werden kann, dass der maximale Drehwinkel bei den Stufen am größten ist, die dem Boden am nahesten sind.

8. Fahrzeugleiter nach dem einen oder anderen der Ansprüche 5 bis 7, **dadurch gekennzeichnet, dass** die Fahrzeugleiter Stufen aufweist, deren Länge zwischen dem genannten ersten (3a - 3c) und zweiten Ende (5a - 5c) Stufe für Stufe in Richtung der Drehachse geringer wird.

9. Fahrzeugleiter nach Anspruch 8, **dadurch gekennzeichnet, dass** die Fahrzeugleiter so ausgebildet ist, dass sie an einem Fahrzeug so angebracht werden kann, dass die Länge der Stufen bei den Stufen am kürzesten ist, die am nahesten zu dem Boden liegen.

10. Fahrzeugleiter nach dem einen oder anderen der Ansprüche 5 bis 7, **dadurch gekennzeichnet, dass** jede der Stufen eine eine Federvorrichtung (6a - 6c) enthaltende Haltevorrichtung (4) aufweist, die, die bei einer aufeinander folgenden Belastung der Stufen von einer ersten Stufe (2c) aus, die für eine dem Boden am nahesten liegende Position bestimmt ist, wenn die Stufen an einem Fahrzeug (20) in einer Aufwärtsrichtung angebracht werden, so dass sie nacheinander einer Belastung unterworfen werden, so ausgebildet ist, dass die Verschiebung jeder Stufe (2a - 2c) gleichzeitig gegen eine Federvorrichtung (6a - 6c) stattfindet, und die bei der aufeinander folgenden Belastung der Stufen von einer ersten Stufe (2a) aus, die für eine vom Boden am weitesten entfernt liegende Position bestimmt ist, wenn die Stufen an dem Fahrzeug in einer Richtung nach unten angebracht werden, so ausgebildet ist, dass eine Belastung auf alle Federvorrichtungen (6a - 6c) ausgeübt wird, die zu einer belasteten Stufe und jeder Stufe gehören, die unterhalb der belasteten Stufe liegt.

11. Fahrzeugleiter nach Anspruch 10, **dadurch gekennzeichnet, dass** die Stufe (2c), die so ausgebildet ist, dass sie am nahesten zu dem Boden angeordnet wird, bei der Anbringung an einem Fahrzeug in einer unbelasteten Position mit Hilfe der für diese Stufen vorgesehenen Federvorrichtung (6c) gehalten wird, und dass die Stufen (2a, 2b), die oberhalb dieser Stufe angeordnet sind, gegen die unmittelbar drunter liegende Stufe (2b, 2c) anliegen und in ihrer Anlageposition mit Hilfe der Federvorrichtungen (6b, 6c) gehalten werden, die für diese Stufen vorgesehen sind.

12. Fahrzeugleiter nach Anspruch 10 oder 11, **dadurch gekennzeichnet, dass** die Haltevorrichtungen Dämpfer (18) umfassen, die die Rückkehr der Stufen aus der Anschlagposition in die unbelastete Anlageposition verzögern.

13. Fahrzeug mit einer an dem Fahrzeug angebrachten Fahrzeugleiter nach dem einen oder anderen der Ansprüche 1 bis 12.

## Revendications

1. Echelle de véhicule comportant au moins une marche (2a à 2c) présentant une première extrémité (3a à 3c), qui est fixée de manière pivotante autour d'un axe de rotation (11) à un dispositif de retenue (4), et une seconde extrémité libre (5a à 5c), **caractérisée en ce que** la au moins une marche mentionnée ci-dessus (2a à 2c) est agencée de manière à être amenée, lorsqu'elle est soumise à une charge le long de l'axe de rotation (11), à tourner autour de l'axe de rotation mentionné ci-dessus (11) à partir d'une position de repos non chargée jusque dans une position d'arrêt correspondant à une rotation maximum de la au moins une marche mentionnée ci-dessus (2a à 2c).

2. Echelle de véhicule selon la revendication 1, **caractérisée en ce que** la au moins une marche mentionnée ci-dessus est suspendue dans son dispositif de retenue (4) de manière à être capable d'un déplacement le long de l'axe de rotation mentionné ci-dessus (11), et **en ce que** le dispositif de retenue mentionné ci-dessus comporte des moyens (6, 7, 8) pour provoquer la rotation simultanée de la au moins une marche mentionnée ci-dessus (2a à 2c) en association avec un déplacement de la au moins une marche mentionnée ci-dessus le long de l'axe de rotation mentionné ci-dessus.

3. Echelle de véhicule selon la revendication 2, **caractérisée en ce que** les moyens mentionnés ci-dessus sont constitués d'une piste ou gorge en forme de vis (7) qui s'étend coaxialement autour de l'axe de rotation, laquelle piste ou gorge en forme de vis (7) est agencée de manière à interagir avec un rebord de support (8), interaction en association avec laquelle le déplacement mutuel du rebord de support (8) et de la piste ou de la gorge (7) le long de l'axe de rotation (11) provoque un déplacement de rotation entre le rebord de support et la piste ou la gorge.

4. Echelle de véhicule selon l'une quelconque des revendications 1 à 3, **caractérisée en ce que** le dispositif de retenue (4) comporte un dispositif à ressort (16a à 16c) qui est agencé de manière à amener la au moins une marche mentionnée ci-dessus (2a à 2c) à retourner vers la position de repos non chargée mentionnée ci-dessus.

5. Echelle de véhicule selon l'une quelconque des revendications précédentes, **caractérisée en ce que** l'échelle de véhicule mentionnée ci-dessus comporte au moins deux marches (2a, 2b), qui sont chacune agencées, lorsqu'elles sont soumises à une charge autour d'un axe de rotation, de manière à être amenées à tourner autour de l'axe de rotation mentionné ci-dessus à partir d'une position de repos non chargée vers une position d'arrêt correspondant à la rotation maximum (f) desdites au moins deux marches mentionnées ci-dessus.

6. Echelle de véhicule selon la revendication 5, **caractérisée en ce que** chacune des marches présente un angle de rotation maximum (f) à partir de la position de repos mentionnée ci-dessus vers la rotation maximum mentionnée ci-dessus, et **en ce que** l'angle maximum de rotation augmente pour des marches consécutives dans la direction de l'axe de rotation.

7. Echelle de véhicule selon la revendication 6, **caractérisée en ce que** l'échelle de véhicule est agencée de manière à être montée sur un véhicule de sorte que l'angle de rotation maximum est le plus important pour les marches les plus proches du sol.

8. Echelle de véhicule selon l'une quelconque des revendications 5 à 7, **caractérisée en ce que** l'échelle de véhicule comporte des marches ayant une longueur entre les première (3a à 3c) et seconde (5a à 5c) extrémités mentionnées ci-dessus qui diminue pour des marches consécutives dans la direction de l'axe de rotation.

9. Echelle de véhicule selon la revendication 8, **caractérisée en ce que** l'échelle de véhicule est agencée de manière à être montée sur un véhicule de sorte que la longueur des marches est la plus courte pour les marches les plus proches du sol.

10. Echelle de véhicule selon l'une quelconque des revendications 5 à 7, **caractérisée en ce que** chacune des marches présente un dispositif de retenue (4) contenant un dispositif à ressort (6a à 6c) qui est agencé, dans le cas de la charge consécutive des marches à partir d'une première marche (2c) qui est prévue pour être positionnée la plus proche du sol lorsque les marches sont montées sur un véhicule (20) dans une direction vers le haut, de manière à être soumises à une charge consécutivement les unes après les autres, en association avec quoi le déplacement de chaque marche (2a à 2c) a lieu contre un dispositif à ressort (6a à 6c) à un moment, et **en ce que** dans le cas de la charge consécutive des marches à partir d'une première marche (2a) qui est prévue pour être positionnée la plus éloignée du sol lorsque les marches sont montées sur un véhicule dans une direction vers le bas, une charge est appliquée à tous les dispositifs à ressort (6a à 6c) appartenant à une marche chargée, et de quelconques marches qui sont situées sous la marche chargée.

11. Echelle de véhicule selon la revendication 10, **caractérisée en ce que** la marche (2c) qui est agencée de manière à être positionnée la plus proche du sol en association avec un montage sur un véhicule est retenue dans une position déchargée à l'aide du dispositif à ressort (6c) prévu pour cette marche, et **en ce que** les marches (2a, 2b) qui sont positionnées au-dessus de cette marche sont en appui contre la marche immédiatement sous-jacente (2b, 2c), et sont retenues dans leur position de repos à l'aide du dispositif à ressort (6b, 6c) prévu pour ces marches.

12. Echelle de véhicule selon la revendication 10 ou 11, **caractérisée en ce que** les dispositifs de retenue comportent des amortisseurs (18) qui retardent le retour des marches à partir de la position d'arrêt vers la position de repos non chargée.

13. Véhicule comportant une échelle de véhicule montée sur le véhicule selon l'une quelconque des revendications 1 à 12.
